# EUROPEAN PATENT APPLICATION

(11) **EP 4 382 562 A1**
(43) Date of publication of application: **12.06.2024**
(21) Application number: 22853045.7
(22) Date of filing: 02.08.2022
(51) Int. Cl.: C08K 9/04, C08L 101/00

(54) **INORGANIC FILLING MATERIAL AND INORGANIC FILLING MATERIAL-REINFORCED THERMOPLASTIC RESIN**

(30) Priority: 03.08.2021 JP 2021127407; 03.08.2021 JP 2021127408; 03.08.2021 JP 2021127409
(71) Applicant: Toray Industries, Inc., Tokyo 103-8666 (JP)
(72) Inventor: WAKABAYASHI, Takumi, Nagoya-shi, Aichi 455-8502 (JP); KOBAYASHI, Sadayuki, Nagoya-shi, Aichi 455-8502 (JP)
(74) Representative: Mewburn Ellis LLP
(86) International application number: PCT/JP2022/029608
(87) International publication number: WO 2023/013626

(57) **Abstract**

A surface-treated inorganic filling material obtained by treating an inorganic filling material (A) with at least a polyrotaxane (B) whose cyclic molecule is modified with a graft chain having a reactive functional group, and a silane coupling agent (C). Provided is an inorganic filling material that constitutes an inorganic filling material-reinforced thermoplastic resin excellent in balance among rigidity, strength, and toughness.

## Description

### TECHNICAL FIELD

The present invention relates to a surface-treated inorganic filling material treated with a polyrotaxane and a silane coupling agent, and an inorganic filling material-reinforced thermoplastic resin.

### BACKGROUND ART

An inorganic filling material is used as a composite material with a thermosetting resin such as an unsaturated polyester resin or an epoxy resin, or a thermoplastic resin such as a polyamide or a polyolefin. A composite material containing a resin and an inorganic filling material is excellent in strength, rigidity, dimensional stability, and the like while being lightweight, and thus is widely used for general industrial applications, sports goods applications, aerospace applications, and the like.

There have been made many proposals of adding an inorganic filling material for the purpose of improving the strength and rigidity of such a resin (for example, Patent Document 1). However, when the inorganic filling material is added to the resin, the strength and elastic modulus are improved, but there is a problem that toughness and impact resistance are reduced.

As a method for improving the toughness while maintaining the rigidity of a fiber-reinforced thermoplastic resin, there is proposed a method of adding a polyrotaxane having an effect of preventing local stress concentration to a fiber-reinforced thermoplastic resin (for example, Patent Documents 2 and 3).

### PRIOR ART DOCUMENTS

### PATENT DOCUMENTS

Patent Document 1: Japanese Patent Laid-open Publication No. H6-100774
Patent Document 2: International Publication No. 2018/043025
Patent Document 3: Japanese Patent Laid-open Publication No. 2020-55986

### SUMMARY OF THE INVENTION

### PROBLEMS TO BE SOLVED BY THE INVENTION

However, in the technique of Patent Document 2, toughness is improved while rigidity is maintained, and ductile fracture occurs, but there is a problem that strength is significantly reduced. In the technique of Patent Document 3, toughness is improved while rigidity and strength are maintained, but there is a problem that brittle fracture occurs without occurrence of ductile fracture. In the inorganic filling material-reinforced thermoplastic resin, interface peeling due to stress concentration on the interface of the inorganic filling material serves as a starting point of fracture, so that the polyrotaxane exhibits an effect at the interface of the inorganic filling material. In Patent Document 2, in order to develop the stress distribution effect of polyrotaxane at the interface of the fibrous filling material, a large amount of polyrotaxane is blended with the thermoplastic resin, so that the strength of the resin is reduced. Further, in Patent Document 3, by a method of using a fibrous filling material in which a compound having high affinity with polyrotaxane adheres to the surface or a method of directly treating the surface of the fibrous filling material (C) with polyrotaxane, the polyrotaxane is localized at the interface between the thermoplastic resin and the fibrous filling material to thereby prevent a decrease in strength. However, in the method described in Cited Document 3, the polyrotaxane and the fibrous filling material are insufficiently bonded, resulting in brittle fracture.

In view of the above, an object of the present invention is to provide an inorganic filling material capable of constituting an inorganic filling material-reinforced thermoplastic resin that is excellent in balance among rigidity, strength, and toughness, and that exhibits ductile fracture morphology while maintaining rigidity and strength.

### SOLUTIONS TO THE PROBLEMS

In order to solve the problems described above, the present invention includes the following configurations.
(1) A surface-treated inorganic filling material, wherein an inorganic filling material (A) is treated with at least a polyrotaxane (B) whose cyclic molecule is modified with a graft chain having a reactive functional group, and a silane coupling agent (C).
(2) The surface-treated inorganic filling material according to (1), wherein the silane coupling agent (C) has any one group of an epoxy group, a glycidyl group, an acid anhydride, an isocyanate group, an isothiocyanate group, and a functional group containing a polymerizable double bond.
(3) The surface-treated inorganic filling material according to (1), wherein the inorganic filling material (A) is treated with at least the polyrotaxane (B) whose cyclic molecule is modified with a graft chain having a reactive functional group, the silane coupling agent (C), and a compound (D) having two or more functional groups capable of reacting with an amino group and a reactive functional group of the polyrotaxane (B) in a molecule, and the silane coupling agent (C) has at least one amino group.
(4) The surface-treated inorganic filling material according to any one of (1) to (3), wherein the inorganic filling material (A) is an inorganic filling material selected from a glass fiber, talc, silica, clay, wollastonite, mica, and a glass flake.
(5) The surface-treated inorganic filling material according to any one of (1) to (3), wherein the inorganic filling material (A) is an inorganic filling material selected from talc, silica, clay, wollastonite, mica, and a glass flake.
(6) An inorganic filling material-reinforced thermoplastic resin containing at least the surface-treated inorganic filling material according to any one of (1) to (5) and a thermoplastic resin (E), wherein the inorganic filling material-reinforced thermoplastic resin contains 1 part by weight or more and 200 parts by weight or less of the surface-treated inorganic filling material relative to 100 parts by weight of the thermoplastic resin (E).

### EFFECTS OF THE INVENTION

According to the inorganic filling material of the present invention, it is possible to obtain an inorganic filling material-reinforced thermoplastic resin excellent in balance among rigidity, strength, and toughness.

### EMBODIMENTS OF THE INVENTION

Hereinafter, the present invention will be described in more detail.

The surface-treated inorganic filling material of the present invention is obtained by treating an inorganic filling material (A) with at least a polyrotaxane (B) whose cyclic molecule is modified with a graft chain (hereinafter, referred to as polyrotaxane (B)) and a silane coupling agent (C). In the present invention, treating the inorganic filling material (A) with the polyrotaxane (B) and the silane coupling agent (C) means allowing the polyrotaxane (B) and the silane coupling agent (C) to adhere to the surface of the inorganic filling material (A). That is, the "surface-treated inorganic filling material" of the present invention represents an inorganic filling material in a state in which at least the polyrotaxane (B) and the silane coupling agent (C) is physically adhered to or chemically bonded to the surface of the inorganic filling material (A). In the present invention, a component containing at least the polyrotaxane (B) and the coupling agent (C) may be referred to as a surface treatment agent. When the compound (D) described later is used, the compound (D) is also included in the surface treatment agent.

In addition, by blending the surface-treated inorganic filling material of the present invention in an amount of 1 part by weight or more and 200 parts by weight or less relative to 100 parts by weight of the thermoplastic resin (E), it is possible to obtain an inorganic filling material-reinforced thermoplastic resin excellent in balance among rigidity, strength, and toughness. The inorganic filling material-reinforced thermoplastic resin is a composition containing an inorganic filling material and a thermoplastic resin. Hereinafter, the inorganic filling material-reinforced thermoplastic resin may be referred to as a thermoplastic resin composition. In the surface-treated inorganic filling material, the inorganic filling material (A) reacts with the polyrotaxane (B) and the silane coupling agent (C), which adhere to the surface of the inorganic filling material (A), by heat applied in the production of the surface-treated inorganic filling material or in the mixing with the thermoplastic resin (E). Thereby, the stress distribution effect of the polyrotaxane is efficiently exhibited at the interface of the inorganic filling material, thus making it possible to improve the rigidity, strength, and toughness of the inorganic filling material-reinforced thermoplastic resin in a well-balanced manner.

First, the inorganic filling material (A) in the present invention will be described.

The inorganic filling material (A) used in the present invention may be either a fibrous filling material or a non-fibrous filling material. Examples of the fibrous filling material include fibrous or whisker-like filling materials such as glass fibers, gypsum fibers, ceramic fibers, asbestos fibers, zirconia fibers, alumina fibers, silica fibers, titanium oxide fibers, silicon carbide fibers, rock wool, potassium titanate whiskers, silicon nitride whiskers, wollastonite, and alumina silicate; and glass fibers coated with one or more metals selected from the group consisting of nickel, copper, cobalt, silver, aluminum, iron, and alloys thereof. Examples of the non-fibrous filling material include non-swellable silicates such as talc, wollastonite, zeolite, sericite, mica, kaolin, clay, pyrophyllite, bentonite, asbestos, alumina silicate, and calcium silicate; swellable lamellar silicates such as swellable micas including as Li-type fluorine taeniolite, Na-type fluorine taeniolite, Na-type tetrasilicic fluorine mica, and Li-type tetrasilicic fluorine mica; metal oxides such as silicon oxide, magnesium oxide, alumina, silica, diatomaceous earth, zirconium oxide, titanium oxide, iron oxide, zinc oxide, calcium oxide, tin oxide, and antimony oxide; metal carbonates such as calcium carbonate, magnesium carbonate, zinc carbonate, barium carbonate, dolomite, and hydrotalcite; metal sulfates such as calcium sulfate and barium sulfate; metal hydroxides such as magnesium hydroxide, calcium hydroxide, aluminum hydroxide, and basic magnesium carbonate; various clay minerals such as smectite clay minerals including montmorillonite, beidellite, nontronite, saponite, hectorite, and sauconite, vermiculite, halloysite, kanemite, kenyaite, zirconium phosphate, and titanium phosphate; flat glass, glass beads, glass flakes, ceramic beads, boron nitride, aluminum nitride, silicon carbide, calcium phosphate, carbon black, and graphite. Two or more filling materials may be contained. Among them, inorganic filling materials selected from glass fibers, talc, silica, clay, wollastonite, mica, flat glass, glass beads, and glass flakes are particularly preferable.

The surface-treated inorganic filling material of the present invention is surface-treated with a polyrotaxane (B) whose cyclic molecule is modified with a graft chain having a reactive functional group at the end. The rotaxane commonly refers to a molecule having a shape in which a linear molecule having a bulky blocking group at both ends passes through a cyclic molecule, as described in, for example, Harada, A., Li, J. & Kamachi, M., Nature 356, 325 to 327. A rotaxane in which a plurality of cyclic molecules are passed through one linear molecule is referred to as a polyrotaxane.

The polyrotaxane is composed of a linear molecule and a plurality of cyclic molecules, has a structure in which the linear molecule passes through openings of the plurality of cyclic molecules, and also has a bulky blocking group at both ends of the linear molecule so that the cyclic molecules are not eliminated from the linear molecule. In the polyrotaxane, the cyclic molecule has a structure in which the cyclic molecule can freely move on the linear molecule, but cannot escape from the linear molecule due to the blocking group. Namely, the linear molecule and the cyclic molecule have a structure in which the form is maintained not by a chemical bond but by a mechanical bond. Such a polyrotaxane has an effect of alleviating stress from the outside and stress remaining the inside because the cyclic molecule has high mobility.

The linear molecule is not particularly limited as long as it is a molecule which passes through the opening of the cyclic molecule and has a functional group capable of reacting with the blocking group. Preferable examples of the linear molecule include polyalkylene glycols such as polyethylene glycol, polypropylene glycol, and polytetramethylene glycol; hydroxyl group-terminated polyolefins such as polybutadiene diol, polyisoprene diol, polyisobutylene diol, poly(acrylonitrile-butadiene)diol, hydrogenated polybutadiene diol, polyethylene diol, and polypropylene diol; polyesters such as polycaprolactone diol, polylactic acid, polyethylene adipate, polybutylene adipate, polyethylene terephthalate, and polybutylene terephthalate; terminal functional polysiloxanes such as silanol-terminated polydimethylsiloxane; amino group-terminated chain polymers such as amino group-terminated polyethylene glycol, amino group-terminated polypropylene glycol, and amino group-terminated polybutadiene; and polyfunctional chain polymers having three or more functional groups capable of reacting with the blocking group in one molecule. Among them, polyethylene glycol and/or amino group-terminated polyethylene glycol is preferably used in view of easy synthesis of the polyrotaxane.

The number average molecular weight of the linear molecule is preferably 2,000 or more, thus making it possible to improve the strength of the inorganic filling material-reinforced thermoplastic resin. The number average molecular weight is more preferably 10,000 or more. Meanwhile, the number average molecular weight is preferably 100,000 or less, thus making it possible to optimize the interaction with the thermoplastic resin (E), and to further improve the toughness of the inorganic filling material-reinforced thermoplastic resin. The number average molecular weight is more preferably 50,000 or less. Here, the number average molecular weight of the linear molecule refers to a value in terms of polymethyl methacrylate, measured by gel permeation chromatography using hexafluoroisopropanol as a solvent.

The blocking group is not particularly limited as long as it can be bonded to the terminal functional group of the linear molecule, and is a group sufficiently bulky so that the cyclic molecule is not eliminated from the linear molecule. Examples of the blocking group preferably used include a dinitrophenyl group, a cyclodextrin group, an adamantyl group, a trityl group, a fluoresceinyl group, a pyrenyl group, an anthracenyl group, and a main chain or a side chain of a polymer having a number average molecular weight of 1,000 to 1,000,000. Two or more blocking groups may be used.

The cyclic molecule is not particularly limited as long as the linear molecule can pass through the opening of thereof. Examples of the cyclic molecule preferably used include cyclodextrins, crown ethers, cryptands, macrocyclic amines, calixarenes, and cyclophanes. Cyclodextrins are cyclic compounds of a plurality of glucoses linked via an α-1,4 bond. A compound selected from α-cyclodextrin, β-cyclodextrin, and γ-cyclodextrin is more preferably used.

In the polyrotaxane (B), the cyclic molecule is modified with a graft chain. By modifying the cyclic molecule with the graft chain, the affinity between the polyrotaxane (B) and the interface of the inorganic filling material (A) is improved. As a result, when the surface-treated inorganic filling material of the present invention is blended with the thermoplastic resin (E) to form an inorganic filling material-reinforced thermoplastic resin, it is possible to improve toughness while rigidity and strength are maintained, to thereby improve rigidity, strength, and toughness in a well-balanced manner.

The graft chain is preferably composed of polyester. The graft chain is more preferably an aliphatic polyester in view of compatibility with the thermoplastic resin (E) and solubility in an organic solvent. Examples of the aliphatic polyester include polylactic acid, polyglycolic acid, poly(3-hydroxybutyrate), poly(4-hydroxybutyrate), poly(3-hydroxybutyrate/3-hydroxyvalerate), and poly(ε-caprolactone). Among them, poly(ε-caprolactone) is more preferable from the viewpoint of compatibility with the thermoplastic resin (E).

The graft chain has a reactive functional group at the end thereof. The reactive functional group at the end of the graft chain is not particularly limited, and examples thereof include at least one or more groups selected from a hydroxyl group, an amino group, a carboxyl group, an acid anhydride group, a glycidyl group, an isocyanate group, an isothiocyanate group, a thiol group, an oxazoline group, a sulfonic acid group, an acrylic group, and a methacrylic group.

The concentration of functional group at the end of the graft chain of the polyrotaxane (B) is preferably 2 × 10⁻⁵ mol/g or more and 5 × 10⁻⁴ mol/g or less. When the concentration of functional group is 2 × 10⁻⁵ mol/g or more, the compatibility with the thermoplastic resin (E) can be improved. As a result, it is possible to further improve toughness while maintaining the strength of the inorganic filling material-reinforced thermoplastic resin, to thereby improve the strength and the toughness in a well-balanced manner. The concentration of functional group is more preferably 3 × 10⁻⁵ mol/g or more. Meanwhile, when the concentration of functional group is 5 × 10⁻⁴ mol/g or less, it is possible to suppress aggregation due to association between the functional groups of the polyrotaxane (B) and excessive chemical crosslinking with the thermoplastic resin (E), to thereby suppress generation of aggregates and gels and to further improve the toughness of the inorganic filling material-reinforced thermoplastic resin. The concentration of functional group is more preferably 1 × 10⁻⁴ mol/g or less.

Here, the concentration of functional group at the end of the graft chain of the polyrotaxane (B) can be determined by titration. For example, when the functional group at the end of the graft chain is a carboxyl group, the carboxyl group concentration can be determined by the following method. An absolutely dried sample is produced by drying the polyrotaxane (B) for 10 hours or more using a vacuum dryer at 80°C. The carboxyl group concentration can be determined by titrating a solution obtained by dissolving 0.2 g of an absolutely dried sample in 25 ml of benzyl alcohol with an ethanol solution of potassium hydroxide having a concentration of 0.02 mol/L. For other functional groups, the concentration of functional group can be calculated by a known method.

The functional group at the end of the graft chain can be incorporated, for example, by reacting a polyrotaxane whose cyclic molecule is modified with a graft chain with an introduction compound having a desired functional group and capable of reacting with the end of the graft chain. In this case, the concentration of functional group at the end of the graft chain can be adjusted to fall within a desired range by, for example, adjusting the charge ratio between the polyrotaxane whose cyclic molecule is modified with the graft chain and the introduction compound.

The weight average molecular weight of the polyrotaxane (B) is preferably 100,000 or more, and it is possible to further improve the strength and toughness of the inorganic filling material-reinforced thermoplastic resin. Meanwhile, the weight average molecular weight of the polyrotaxane (B) is preferably 1,000,000 or less, and it is possible to improve the compatibility with the thermoplastic resin (E), to thereby further improve the toughness of the inorganic filling material-reinforced thermoplastic resin. Here, the weight average molecular weight of the polyrotaxane (B) refers to a value in terms of polymethyl methacrylate, measured by gel permeation chromatography using hexafluoroisopropanol as a solvent.

The surface-treated inorganic filling material of the present invention is surface-treated with the silane coupling agent (C). The silane coupling agent (C) is a compound having an alkoxysilyl group and a functional group reactive with a functional group at the end of the graft chain of the polyrotaxane (B).

Examples of the alkoxy group of the alkoxysilyl group include a methoxy group, an ethoxy group, a propioxy group, and a butoxy group. A methoxy group or an ethoxy group is preferable from the viewpoint of the reactivity. The alkoxysilyl group may be any of a monoalkoxysilyl group, a dialkoxysilyl group, and a trialkoxysilyl group.

Examples of the functional group having reactivity with the functional group at the end of the graft chain of the polyrotaxane (B) include an epoxy group, a glycidyl group, an acid anhydride group, an isocyanate group, an isothiocyanate group, and a functional group containing a polymerizable double bond. Any one group of an epoxy group, an acid anhydride group, an isocyanate group, and a functional group containing a polymerizable double bond is preferable. Examples of the functional group containing a polymerizable double bond include a vinyl group, an acrylic group, and a methacrylic group, and an acrylic group or a methacrylic group is preferable. The inorganic filling material (A) and the polyrotaxane (B) can be bonded alone as long as the silane coupling agent has these functional groups having reactivity with the functional group at the end of the graft chain of the polyrotaxane (B).

Examples of the isocyanate group include an aliphatic isocyanate group, an aromatic isocyanate group, and a blocked isocyanate group, and any of these groups may be used.

The blocked isocyanate group is a functional group in which an isocyanate group is protected by reaction with a blocking agent to be temporarily inactivated. A compound having a plurality of blocked isocyanate groups is a blocked isocyanate compound. The blocking agent can be dissociated when heated to a predetermined temperature. As such a blocked isocyanate compound, an addition reaction product of an isocyanate compound and a blocking agent is used. Examples of the isocyanate compound capable of reacting with the blocking agent include the compounds exemplified as the isocyanate compound. Examples of the blocked isocyanate compound include an isocyanurate, a biuret, and an adduct. Two or more blocked isocyanate compounds may be used in combination if necessary.

Examples of the blocking agent include phenol-based blocking agents such as phenol, cresol, xylenol, chlorophenol, and ethylphenol; lactam-based blocking agents such as ε-caprolactam, δ-valerolactam, γ-butyrolactam, and β-propiolactam; active methylene-based blocking agents such as ethyl acetoacetate and acetylacetone; alcohol-based blocking agents such as methanol, ethanol, propanol, butanol, amyl alcohol, ethylene glycol monomethyl ether, ethylene glycol monoethyl ether, ethylene glycol monobutyl ether, diethylene glycol monomethyl ether, propylene glycol monomethyl ether, benzyl ether, methyl glycolate, butyl glycolate, diacetone alcohol, methyl lactate, and ethyl lactate; oxime-based blocking agents such as formaldehyde oxime, acetaldoxime, acetoxime, methylethyl ketoxime, diacetyl monoxime, and cyclohexanone oxime; mercaptan-based blocking agents such as butyl mercaptan, hexyl mercaptan, t-butyl mercaptan, thiophenol, methylthiophenol, and ethylthiophenol; acid-amide-based blocking agents such as acetamide and benzamide; imide-based blocking agents such as succinimide and maleimide; amine-based blocking agents such as xylidine, aniline, butylamine, and dibutylamine; imidazole-based blocking agents such as imidazole and 2-ethylimidazole; and imine-based blocking agents such as methyleneimine and propyleneimine. The blocking agent may be used alone or in combination of two or more types thereof.

Meanwhile, when the silane coupling agent (C) is a silane coupling agent having at least one amino group, the inorganic filling material (A) and the polyrotaxane (B) cannot be bonded only by the silane coupling agent. Therefore, it is necessary to use the silane coupling agent (C) in combination with the compound (D) having two or more functional groups capable of reacting with the amino group and the reactive functional group of the polyrotaxane (B) in the molecule (hereinafter, the compound (D)). The functional group capable of reacting with the reactive functional group of the polyrotaxane (B) is a functional group capable of forming a chemical bond with the reactive functional group present in the graft chain of the polyrotaxane (B) by heating in a temperature range of 50°C or more and 250°C or less. The functional group of the compound (D) is not limited as long as it is a functional group capable of reacting with the amino group and the reactive functional group of the polyrotaxane (B). Examples of the functional group capable of reacting with the amino group and the reactive functional group of the polyrotaxane (B) include a carboxyl group, a carboxyl group derivative such as an acid halide or acid anhydride group, an epoxy group, a glycidyl group, and an isocyanate group. From the viewpoint of the reactivity, a group selected from an acid anhydride group, an epoxy group, a glycidyl group, and an isocyanate group is preferable. The number of functional groups capable of reacting with the amino group and the reactive functional group of the polyrotaxane (B), which are contained in the compound (D), is not limited as long as it is two or more in one molecule. The functional group may be composed of one type of functional group or several types of functional groups.

Examples of the compound having two or more carboxyl groups or carboxyl group derivatives include aliphatic dicarboxylic acids, aromatic dicarboxylic acids, and derivatives thereof, acrylic acid copolymers, and maleic anhydride copolymers. Examples of the compound having two or more epoxy groups or glycidyl groups include aliphatic epoxy resins, bisphenol A-type epoxy resins, bisphenol F-type epoxy resins, and novolak-type epoxy resins. Examples of the compound having two or more isocyanate groups include aliphatic diisocyanates such as hexamethylene diisocyanate; aromatic diisocyanates such as diphenylmethane diisocyanate and tolylene diisocyanate; and polyfunctional isocyanates such as polymeric MDI.

The weight average molecular weight of the compound (D) is preferably 100,000 or less, and it is possible to improve the compatibility with polyrotaxane, to thereby further improve the toughness of the inorganic filling material-reinforced thermoplastic resin. The weight average molecular weight is more preferably 80,000 or less, and still more preferably 60,000 or less. The weight average molecular weight of the compound (D) refers to a value in terms of polymethyl methacrylate, measured by gel permeation chromatography using hexafluoroisopropanol as a solvent.

The method for producing the surface-treated inorganic filling material of the present invention is not particularly limited as long as the surface treatment agent physically adheres to the surface of the inorganic filling material (A). A method of applying a surface treatment agent-containing liquid in which the surface treatment agent is dissolved or dispersed to the inorganic filling material (A) at one time, or a method of applying a surface treatment agent-containing liquid in which the components constituting the surface treatment agent are individually dissolved or dispersed to the inorganic filling material (A) a plurality of times is preferably used. In this case, the components constituting the surface treatment agent can be applied in any order. The solvent for dissolving or dispersing the surface treatment agent is not particularly limited, and examples thereof include water, acetone, and ethanol. It is preferable to use water from the viewpoint of the dispersibility of the polyrotaxane.

Examples of the means for applying the surface treatment agent to the inorganic filling material include a method of preparing a slurry in which the inorganic filling material (A) is dispersed in the surface treatment agent-containing liquid, mixing the slurry at room temperature, and then separating the inorganic filling material (A) by filtering and drying the inorganic filling material (A) to obtain a surface-treated inorganic filling material, and a method of spraying the surface treatment agent-containing liquid in a mist form onto the inorganic filling material (A). In particular, when a fibrous filling material is used as the inorganic filling material (A), a method of immersing the fibrous filling material in the surface treatment agent-containing liquid via a roller, or a method of bringing the fibrous filling material into contact with a roller to which the surface treatment agent-containing liquid adheres can also be used.

An inorganic filling material-reinforced thermoplastic resin in which the inorganic filling material (A) and the polyrotaxane (B) are chemically bonded is obtained by kneading the surface-treated inorganic filling material of the present invention with the thermoplastic resin (E). As a result, the stress distribution effect of the polyrotaxane is efficiently exhibited at the interface of the inorganic filling material, thus making it possible to improve the rigidity, strength, and toughness of the inorganic filling material-reinforced thermoplastic resin in a well-balanced manner. In the production of the surface-treated inorganic filling material, the inorganic filling material (A) and the polyrotaxane (B) may or may not be chemically bonded. When the surface-treated inorganic filling material is one in which the inorganic filling material (A) and the polyrotaxane (B) are chemically bonded, an inorganic filling material-reinforced thermoplastic resin in which the inorganic filling material (A) and the polyrotaxane (B) are chemically bonded even after kneading with the thermoplastic resin (E) is obtained. Even when the surface-treated inorganic filling material is one in which the inorganic filling material (A) and the polyrotaxane (B) are not chemically bonded, an inorganic filling material-reinforced thermoplastic resin in which the inorganic filling material (A) and the polyrotaxane (B) are chemically bonded is obtained by reacting the inorganic filling material (A) and the polyrotaxane (B) with the silane coupling agent (C), or the silane coupling agent (C) having an amino group and the compound (D) having two or more functional groups capable of reacting with the amino group and the reactive functional group of the polyrotaxane (B) in the molecule by heat generated by kneading with the thermoplastic resin (E). A surface-treated inorganic filling material in which the inorganic filling material (A) and the polyrotaxane (B) are chemically bonded is preferable. Examples of the method for chemically bonding the inorganic filling material (A) and the polyrotaxane (B) in the production of the surface-treated inorganic filling material include a method of heating the inorganic filling material (A) to which the polyrotaxane (B) is applied, at 40°C or more and 250°C or less. By heating at 40°C or more, the reactivity is improved, thus making it possible to increase the amount of the polyrotaxane bond in the surface-treated inorganic filling material. Meanwhile, by heating at 250°C or less, the decomposition of the polyrotaxane (B) can be suppressed. In addition, a method of applying the surface treatment agent-containing liquid while heating the surface treatment agent-containing liquid at 40°C or more and 90°C or less when the surface treatment agent-containing liquid is applied to the inorganic filling material (A) is also exemplified. By setting the temperature of the surface treatment agent-containing liquid to 40°C or more, the reactivity is improved, thus making it possible to increase the amount of the polyrotaxane bond in the surface-treated inorganic filling material. In addition, by setting the temperature to 90°C or less, volatilization of the solvent of the surface treatment agent-containing liquid is suppressed, thus making it possible to keep the concentration constant.

Here, whether or not the inorganic filling material (A) and the polyrotaxane (B) are chemically bonded can be determined by IR measurement. First, about 2 g of the surface-treated inorganic filling material is washed with acetone to remove the polyrotaxane (B) not chemically bonded to the inorganic filling material (A), and the resulting surface-treated inorganic filling material is dried. The dried surface-treated inorganic filling material is mixed with KBr to prepare a tablet, and IR measurement is performed. The IR measurement is performed in accordance with JIS K0117:2017, and when there is absorption at around 1750 cm⁻¹ derived from the C=O bond of polycaprolactone, which is a constituent component of the polyrotaxane (B), it can be determined that the inorganic filling material (A) and the polyrotaxane (B) are chemically bonded.

In the surface-treated inorganic filling material of the present invention, the amount of the polyrotaxane (B) adhering to the surface of the inorganic filling material (A) is preferably 0.01 parts by weight or more and 20 parts by weight or less relative to 100 parts by weight of the inorganic filling material (A). When the adhesion amount of the polyrotaxane (B) is 0.01 parts by weight or more, the stress relaxation effect of the polyrotaxane (B) is sufficiently exhibited, so that the toughness of the inorganic filling material-reinforced thermoplastic resin is improved. The adhesion amount of the polyrotaxane (B) is preferably 0.1 parts by weight or more. Meanwhile, when the adhesion amount of the polyrotaxane (B) is 20 parts by weight or less, the strength and heat resistance of the resulting inorganic filling material-reinforced thermoplastic resin can be maintained. The adhesion amount of the polyrotaxane (B) is preferably 15 parts by weight or less, and more preferably 10 parts by weight or less.

The amount of the silane coupling agent (C) adhering to the surface of the inorganic filling material (A) is preferably 0.01 parts by weight or more and 5 parts by weight or less relative to 100 parts by weight of the inorganic filling material (A). When the adhesion amount of the silane coupling agent (C) is 0.01 parts by weight or more, the bonding amount between the inorganic filling material (A) and the polyrotaxane (B) when the inorganic filling material-reinforced thermoplastic resin is formed increases, so that the toughness is improved. In addition, when the adhesion amount of the silane coupling agent (C) is 5.0 parts by weight or less, it is possible to prevent the toughness from decreasing due to the progress of crosslinking between the thermoplastic resins or between the polyrotaxanes (B) when the inorganic filling material-reinforced thermoplastic resin is formed. The adhesion amount of the silane coupling agent (C) is preferably 4 parts by weight or less, and more preferably 3 parts by weight or less.

In the surface-treated inorganic filling material of the present invention, a coating agent such as a sizing agent, an antistatic agent, a surfactant, an antioxidant, a film-forming agent, or a lubricant may be applied to the surface of the inorganic filling material if necessary within a range not impairing the object of the present invention. Examples of the sizing agent include sizing agents containing a compound selected from a carboxylic acid-based compound, a maleic anhydride-based compound, a urethane-based compound, an acrylic compound, an epoxy-based compound, a phenol-based compound, and derivatives thereof.

By blending the surface-treated inorganic filling material of the present invention with the thermoplastic resin (E), an inorganic filling material-reinforced thermoplastic resin excellent in balance among rigidity, strength, and toughness can be obtained.

The thermoplastic resin (E) is not particularly limited as long as it is a resin exhibiting thermoplasticity. Examples thereof include a styrene-based resin, a fluororesin, polyoxymethylene, polyamide, polyester, polyimide, polyamideimide, vinyl chloride, an olefin-based resin, polyacrylate, polyphenylene ether, polycarbonate, polyethersulfone, polyetherimide, polyetherketone, polyether ether ketone, polyarylene sulfide, a cellulose derivative, a liquid crystalline resin, and modified resins thereof. Two or more thermoplastic resins may be contained.

Examples of the styrene-based resin include PS (polystyrene), HIPS (high impact polystyrene), AS (acrylonitrile/styrene copolymer), AES (acrylonitrile/ethylene-propylene-non-conjugated diene rubber/styrene copolymer), ABS (acrylonitrile/butadiene/styrene copolymer), and MBS (methyl methacrylate/butadiene/styrene copolymer). Here, the symbol "/" means a copolymer, and the same shall apply hereinafter. Two or more styrene-based resins may be contained. Among them, ABS is particularly preferable.

Specific examples of the polyamide include polycaproamide (nylon 6), polyhexamethylene adipamide (nylon 66), polypentamethylene adipamide (nylon 56), polytetramethylene adipamide (nylon 46), polyhexamethylene sebacamide (nylon 610), polyhexamethylene dodecamide (nylon 612), polyundecanamide (nylon 11), polydodecanamide (nylon 12), polycaproamide/polyhexamethylene adipamide copolymer (nylon 6/66), polycaproamide/polyhexamethylene terephthalamide copolymer (nylon 6/6T), polyhexamethylene adipamide/polyhexamethylene isophthalamide copolymer (nylon 66/6I), polyhexamethylene terephthalamide/polyhexamethylene isophthalamide copolymer (nylon 6T/6I), polyhexamethylene terephthalamide/polydodecanamide copolymer (nylon 6T/12), polyhexamethylene adipamide/polyhexamethylene terephthalamide/polyhexamethylene isophthalamide copolymer (nylon 66/6T/6I), polyxylylene adipamide (nylon XD6), polyhexamethylene terephthalamide/poly-2-methylpentamethylene terephthalamide copolymer (nylon 6T/M5T), polynonamethylene terephthalamide (nylon 9T), and copolymers thereof. Two or more polyamides may be contained.

The polymerization degree of the polyamide is not particularly limited, and a relative viscosity measured in a 98% concentrated sulfuric acid solution having a resin concentration of 0.01 g/ml at 25°C is preferably in a range of 1.5 to 7.0, and more preferably 2.2 to 4.0.

Examples of the olefin-based resin include polypropylene, polyethylene, an ethylene/propylene copolymer, an ethylene/1-butene copolymer, an ethylene/propylene/non-conjugated diene copolymer, an ethylene/ethyl acrylate copolymer, an ethylene/glycidyl methacrylate copolymer, an ethylene/vinyl acetate/glycidyl methacrylate copolymer, a propylene-g-maleic anhydride copolymer, an ethylene/propylene-g-maleic anhydride copolymer, and a methacrylic acid/methyl methacrylate/glutaric anhydride copolymer. Two or more olefin-based resins may be contained.

The polyester is preferably a polymer or a copolymer including residues of a dicarboxylic acid or an ester-forming derivative thereof and a diol or an ester-forming derivative thereof as main structural units. Among them, aromatic polyesters such as polyethylene terephthalate, polypropylene terephthalate, polybutylene terephthalate, polycyclohexanedimethylene terephthalate, polyethylene naphthalate, polypropylene naphthalate, polybutylene naphthalate, polyethylene isophthalate/terephthalate, polypropylene isophthalate/terephthalate, polybutylene isophthalate/terephthalate, polyethylene terephthalate/naphthalate, polypropylene terephthalate/naphthalate, and polybutylene terephthalate/naphthalate are particularly preferable, and polybutylene terephthalate is most preferable. Two or more polyesters may be contained. In these polyesters, the proportion of the terephthalic acid residue in all dicarboxylic acid residues is preferably 30 mol% or more, and more preferably 40 mol% or more.

The polyester may contain one or more residues selected from a hydroxycarboxylic acid or an ester-forming derivative thereof and a lactone. Examples of the hydroxycarboxylic acid include glycolic acid, lactic acid, hydroxypropionic acid, hydroxybutyric acid, hydroxyvaleric acid, hydroxycaproic acid, o-hydroxybenzoic acid, m-hydroxybenzoic acid, p-hydroxybenzoic acid, and 6-hydroxy-2-naphthoic acid. Examples of the lactone include caprolactone, valerolactone, propiolactone, undecalactone, and 1,5-oxepan-2-one. Examples of the polymer or copolymer having these residues as structural units include aliphatic polyester resins such as polyglycolic acid, polylactic acid, polyglycolic acid/lactic acid, and polyhydroxybutyric acid/β-hydroxybutyric acid/β-hydroxyvaleric acid.

The melting point of the polyester is not particularly limited, and is preferably 120°C or more, and more preferably 220°C or more in view of the heat resistance. The upper limit is not particularly limited, and is preferably 300°C or less, and more preferably 280°C or less. The melting point of the polyester is determined by the following procedure using a differential scanning calorimeter (DSC). In an inert gas atmosphere, the temperature of the polyester is decreased from a molten state to 30°C at a temperature decrease rate of 20°C/min, and then increased at a temperature rise rate of 20°C/min, and the temperature of an endothermic peak observed is defined as the melting point. The temperature is preferably increased to the melting point + 40°C.

The amount of the carboxyl end group of the polyester is not particularly limited, and is preferably 50 eq/t or less, and more preferably 10 eq/t or less in view of the fluidity, hydrolysis resistance, and heat resistance. The lower limit is 0 eq/t. The amount of the carboxyl end group of the polyester is a value measured by dissolving a polyester resin in an o-cresol/chloroform (2/1, vol/vol) solvent, and then titrating the resulting solution with a 0.05 mol/L potassium hydroxide ethanolic solution using 10 bromophenol blue as an indicator.

The intrinsic viscosity of the polyester is not particularly limited as long as melt-kneading is possible. The intrinsic viscosity measured at 25°C in an o-chlorophenol solution prepared so as to have a concentration of 0.5 wt% is preferably in a range of 0.36 to 1.60 dl/g, more preferably 0.50 to 1.25 dl/g, and still more preferably 0.7 to 1.0 dl/g in view of the moldability.

The molecular weight of the polyester is not particularly limited. The weight average molecular weight (Mw) of the polyester is preferably in a range of 50,000 to 500,000, and more preferably 150,000 to 250,000 in view of the heat resistance. In the present invention, the weight average molecular weight (Mw) of the polyester is a relative value to the molecular weight of standard polymethyl methacrylate, measured by gel permeation chromatography (GPC).

The method for producing the polyester is not particularly limited, and examples thereof include known polycondensation methods and ring-opening polymerization methods. The method may be performed by either batch polymerization or continuous polymerization, and either transesterification reaction or reaction by direct polymerization may be employed.

The polycarbonate can be obtained by a phosgene method in which phosgene is blown into a bifunctional phenol-based compound in the presence of a caustic alkali and a solvent, a transesterification method in which a bifunctional phenol-based compound and diethyl carbonate are transesterified in the presence of a catalyst, or the like. Examples of the polycarbonate include aromatic homopolycarbonate and aromatic copolycarbonate. The viscosity average molecular weight of these aromatic polycarbonates is preferably in a range of 10,000 to 100,000.

Examples of the bifunctional phenol-based compound include 2,2'-bis(4-hydroxyphenyl)propane, 2,2'-bis(4-hydroxy-3,5-dimethylphenyl)propane, bis(4-hydroxyphenyl)methane, 1,1'-bis(4-hydroxyphenyl)ethane, 2,2'-bis(4-hydroxyphenyl)butane, 2,2'-bis(4-hydroxy-3,5-diphenyl)butane, 2,2'-bis(4-hydroxy-3,5-dipropylphenyl)propane, 1,1'-bis(4-hydroxyphenyl)cyclohexane, and 1-phenyl-1,1'-bis(4-hydroxyphenyl)ethane. Two or more bifunctional phenol-based compounds may be used.

Examples of the polyarylene sulfide include polyphenylene sulfide (PPS), polyphenylene sulfide sulfone, polyphenylene sulfide ketone, and random copolymers and block copolymers thereof. Two or more polyarylene sulfides may be used.

The polyarylene sulfide can be produced by usually known methods such as a method of obtaining a polymer having a relatively small molecular weight described in Japanese Examined Patent Publication No. S45-3368, and a method of obtaining a polymer having a relatively large molecular weight described in Japanese Examined Patent Publication No. S52-12240 and Japanese Patent Laid-open Publication No. S61-7332. It is of course possible to use after subjecting the resulting polyarylene sulfide to various treatments such as crosslinking/increasing the molecular weight by heating, heat treatment under an inert gas atmosphere such as nitrogen or under reduced pressure, washing with an organic solvent, hot water, an acid aqueous solution or the like, activation with an acid anhydride, amine, isocyanate, or a functional group-containing compound such as a functional group-containing disulfide compound.

Specific examples of the method for performing crosslinking/increasing the molecular weight of the polyarylene sulfide by heating include a method of performing heating in a heating vessel at a predetermined temperature in an atmosphere of an oxidizing gas such as air or oxygen or in an atmosphere of a mixed gas of the oxidizing gas and an inert gas such as nitrogen or argon until a desired melt viscosity is obtained. The heat treatment temperature is preferably in a range of 200 to 270°C, and the heat treatment time is preferably in a range of 2 to 50 hours. From the viewpoint of performing a heat treatment efficiently and more uniformly, it is preferable to perform heating in a rotary heating vessel or a heating vessel with stirring blades. A specific method for heat-treating the polyarylene sulfide under an atmosphere of an inert gas such as nitrogen or under reduced pressure includes a method of heat-treating the polyarylene sulfide under the conditions of the heat treatment temperature of 200 to 270°C and the heat treatment time of 2 to 50 hours under an atmosphere of an inert gas such as nitrogen or under reduced pressure (preferably 7,000 Nm⁻² or less). From the viewpoint of performing a heat treatment efficiently and more uniformly, it is more preferable to perform heating in a rotary heating vessel or a heating vessel with stirring blades. When the polyarylene sulfide is washed with an organic solvent, N-methylpyrrolidone, acetone, dimethylformamide, chloroform, and the like are preferably used as the organic solvent. The method for washing with the organic solvent includes, for example, a method of immersing a polyarylene sulfide resin in the organic solvent, and it is also possible to appropriately perform stirring or heating if necessary. The washing temperature is preferably normal temperature to 150°C. The polyarylene sulfide that has been washed with the organic solvent is preferably washed several times with water or warm water in order to remove the remaining organic solvent. When the polyarylene sulfide is treated with hot water, the water to be used is preferably distilled water or deionized water. The operation of the hot water treatment is usually performed by introducing a predetermined amount of the polyarylene sulfide into a predetermined amount of water, followed by heating with stirring under normal pressure or in a pressure vessel. The ratio of the polyarylene sulfide resin to water to be used is preferably a bath ratio of 200 g or less of the polyarylene sulfide to 1 liter of water. A specific method in the case of acid-treating the polyarylene sulfide includes, for example, a method of immersing a polyarylene sulfide resin in an acid or an aqueous solution of the acid, and it is also possible to appropriately performing stirring or heating if necessary. Acetic acid or hydrochloric acid is preferably used as the acid. The acid-treated polyarylene sulfide is preferably washed several times with water or warm water in order to remove the remaining acid or salt. The water used for washing is preferably distilled water or deionized water.

The melt viscosity of the polyarylene sulfide is preferably 80 Pa · s or less, and more preferably 20 Pa · s or less, under the conditions of 310°C and a shear rate of 1,000/sec. The lower limit of the melt viscosity is not particularly limited, and is preferably 5 Pa · s or more. Two or more polyarylene sulfides having different melt viscosities may be used in combination. The melt viscosity can be measured using Capilograph (manufactured by Toyo Seiki Seisaku-sho, Ltd.) under the conditions of a die length of 10 mm and a die orifice diameter of 0.5 to 1.0 mm.

Examples of the cellulose derivative include cellulose acetate, cellulose acetate butyrate, and ethyl cellulose. Two or more cellulose derivatives may be contained.

Among these thermoplastic resins, a resin selected from a polyamide resin, a styrene-based resin, a polycarbonate resin, a polyester resin, and a polyarylene sulfide resin is preferable because these thermoplastic resins are excellent in moldability due to their excellent affinity with the inorganic filling material (A), and thus can further improve the mechanical properties and surface appearance of the molded article. Among them, nylon 6 (polyamide 6), nylon 66 (polyamide 66), nylon 610 (polyamide 610), nylon 9T (polyamide 9T), ABS (acrylonitrile/butadiene/styrene copolymer), polycarbonate, polybutylene terephthalate (PBT), polyphenylene sulfide (PPS), and the like can be more preferably used.

The melting point of the thermoplastic resin (E) is preferably 150°C or more and lower than 300°C. When the melting point is 150°C or more, the heat resistance of the inorganic filling material-reinforced thermoplastic resin can be improved. Meanwhile, when the melting point is lower than 300°C, it is possible to appropriately suppress the processing temperature in the production of the inorganic filling material-reinforced thermoplastic resin, to thereby suppress the thermal decomposition of the polyrotaxane (B). Here, the melting point of the thermoplastic resin (E) is determined by the following procedure using a differential scanning calorimeter. In an inert gas atmosphere, the temperature of the thermoplastic resin (E) is decreased from a molten state to 30°C at a temperature decrease rate of 20°C/min, and then increased at a temperature rise rate of 20°C/min, and the temperature of an endothermic peak observed is defined as the melting point. The temperature is preferably increased to the melting point + 40°C. When two or more endothermic peaks are detected, a temperature of an endothermic peak having the largest peak intensity is defined as the melting point.

The content of the surface-treated inorganic filling material in the inorganic filling material-reinforced thermoplastic resin of the present invention is preferably 1 to 200 parts by weight relative to 100 parts by weight of the thermoplastic resin (E). When the content of the surface-treated inorganic filling material is 1 part by weight or more, the effect of improving the mechanical properties and dimensional stability of the molded article can be obtained. The content of the surface-treated inorganic filling material is more preferably 5 parts by weight or more, and still more preferably 10 parts by weight or more. Meanwhile, when the content of the surface-treated inorganic filling material is 200 parts by weight or less, lifting of the inorganic filling material on the surface of the molded article can be suppressed, resulting in excellent surface appearance. The content of the surface-treated inorganic filling material is more preferably 175 parts by weight or less, and still more preferably 150 parts by weight or less.

The inorganic filling material-reinforced thermoplastic resin of the present invention preferably further contains a silane coupling agent. The silane coupling agent is more preferably a silane coupling agent having a functional group reactive with the thermoplastic resin (E). Examples of the silane coupling agent include silane coupling agents having any functional group such as an epoxy group, a glycidyl group, an acid anhydride group, an isocyanate group, an isothiocyanate group, an acyl halide group, an aldehyde group, a ketone group, an amino group, a vinyl group, an acrylic group, and a methacrylic group. By blending the silane coupling agent, the polyrotaxane (B) at the interface of the inorganic filling material and the thermoplastic resin (E) are bonded, thus making it possible to more efficiently exhibit the stress distribution effect. Thus, the rigidity, strength, and toughness of the inorganic filling material-reinforced thermoplastic resin can be improved in a well-balanced manner.

The blending amount of the silane coupling agent is preferably 0.01 parts by weight or more and 5 parts by weight or less relative to 100 parts by weight of the thermoplastic resin (E). When the blending amount of the silane coupling agent is 0.01 parts by weight or more, the polyrotaxane (B) and the thermoplastic resin (E) are efficiently bonded at the interface of the inorganic filling material, and the stress distribution effect by the polyrotaxane (B) is sufficiently exhibited. The blending amount of the silane coupling agent is more preferably 0.05 parts by weight or more, and more preferably 0.1 parts by weight or more. Meanwhile, when the amount of the silane coupling agent is 5 parts by weight or more, crosslinking of the thermoplastic resin proceeds and the toughness decreases. The blending amount of the silane coupling agent is preferably 3 parts by weight or less, and more preferably 2 parts by weight or less.

The inorganic filling material-reinforced thermoplastic resin of the present invention can contain an elastomer as long as the object of the present invention is not impaired. Examples of the elastomer include a natural rubber, a silicone rubber, a fluororubber, a thermoplastic elastomer, a core-shell rubber, and an ionomer. Among them, from the viewpoint of compatibility with the thermoplastic resin (E), an elastomer selected from a thermoplastic elastomer and a core-shell rubber is preferable, and a thermoplastic elastomer is more preferably used. When the thermoplastic elastomer is used as the elastomer, the thermoplastic elastomer is also included as the thermoplastic resin (E) in the calculation of the content ratio of each component in the inorganic filling material-reinforced thermoplastic resin.

The inorganic filling material-reinforced thermoplastic resin of the present invention may contain various additives and the like as long as the object of the present invention is not impaired.

Specific examples of the various additives include a heat stabilizer, a plasticizer, a crystal nucleating agent, a metal soap, a mold release agent, a coloring-preventing agent, a lubricant, an ultraviolet protective agent, a coloring agent, a flame retardant, and a foaming agent. When the inorganic filling material-reinforced thermoplastic resin contains these additives, the content thereof is preferably 10 parts by weight or less, and more preferably 1 part by weight or less relative to 100 parts by weight of the thermoplastic resin (E) in order to sufficiently make use of the feature of the thermoplastic resin (E).

The method for producing the inorganic filling material-reinforced thermoplastic resin of the present invention is not particularly limited, and examples thereof include a method of kneading raw materials in a molten state, and a method of mixing raw materials in a solution state. The method of kneading in a molten state is preferable in view of improving the reactivity. Examples of the melt kneader for kneading in a molten state include a single-screw extruder, a multiple-screw extruder such as a twin-screw extruder or a quad-screw extruder, an extruder such as a twin-screw/single-screw composite extruder, and a kneader. An extruder that enables continuous production is preferable in view of the productivity. A twin-screw extruder is more preferable in view of improvement in the kneadability, reactivity, and productivity.

Hereinafter, a case where the inorganic filling material-reinforced thermoplastic resin of the present invention is produced using a twin-screw extruder will be described as an example. The maximum resin temperature in the melt-kneading step is preferably 300°C or less from the viewpoint of suppressing the thermal deterioration of the polyrotaxane (B) and further improving the toughness. Meanwhile, the maximum resin temperature is preferably equal to or more than the melting point of the thermoplastic resin (E). Here, the maximum resin temperature refers to the highest temperature among temperatures measured by resin thermometers uniformly arranged at equal intervals in a plurality of positions of the extruder.

Regarding the ratio between the extrusion amount of the inorganic filling material-reinforced thermoplastic resin and the screw rotation speed in the melt-kneading step, the extrusion amount per 1 rpm of screw rotation speed is preferably 0.01 kg/h or more, and more preferably 0.05 kg/h or more from the viewpoint of further suppressing thermal deterioration of the thermoplastic resin (E) and the polyrotaxane (B). Meanwhile, the extrusion amount per 1 rpm of screw rotation speed is preferably 1 kg/h or less from the viewpoint of further promoting the reaction between the thermoplastic resin (E) and the polyrotaxane (B) resin. Here, the extrusion amount refers to the weight (kg) of the inorganic filling material-reinforced thermoplastic resin to be ejected from the extruder per hour. The extrusion amount per 1 rpm of screw rotation speed is a value obtained by dividing the extrusion amount by the screw rotation speed.

The inorganic filling material-reinforced thermoplastic resin thus obtained can be molded by a known method, and various molded articles such as a sheet and a film can be obtained. Examples of the molding method include injection molding, injection compression molding, extrusion molding, compression molding, blow molding, and press molding.

The inorganic filling material-reinforced thermoplastic resin of the present invention and the molded article thereof can be used for various applications such as automobile components, electrical and electronic components, construction components, various containers, commodities, household articles, and sanitary goods, by making use of their excellent properties. In particular, the inorganic filling material-reinforced thermoplastic resin of the present invention and the molded article thereof are particularly preferably used for applications which need to have toughness and rigidity, such as automobile exterior components, automobile electrical components, automobile under-hood components, and automobile gear components, and electric and electronic components such as housing, connector, and reflector. Specifically, suitable applications thereof include automobile engine peripheral components such as engine cover, air intake pipe, timing belt cover, intake manifold, filler cap, throttle body, and cooling fan; automobile under-hood components such as cooling fan, top and base of radiator tank, cylinder head cover, oil pan, brake piping, tube for fuel piping, and exhaust gas system components; automobile gear components such as gear, actuator, bearing retainer, bearing cage, chain guide, and chain tensioner; automobile interior components such as shift lever bracket, steering lock bracket, key cylinder, door inner handle, door handle cowl, rear-view mirror bracket, air conditioner switch, instrument panel, console box, glove compartment, steering wheel, and trim; automobile exterior components such as front fender, rear fender, fuel lid, door panel, cylinder head cover, door mirror stay, tail gate panel, license garnish, roof rail, engine mount bracket, rear garnish, rear spoiler, trunk lid, rocker molding, molding, lamp housing, front grill, mud guard, and side bumper; air intake and exhaust system components such as air intake manifold, intercooler inlet, exhaust pipe cover, inner bush, bearing retainer, engine mount, engine head cover, resonator, and throttle body; engine cooling water system components such as chain cover, thermostat housing, outlet pipe, radiator tank, alternator, and delivery pipe; automobile electrical components such as connector, wire harness connector, motor component, lamp socket, in-vehicle sensor switch, and combination switch; and electric and electronic components such as SMT connector, socket, card connector, jack, power supply component, switch, sensor, capacitor seat plate, relay, resistor, fuse holder, coil bobbin, IC or LED housing, and reflector. Further, the inorganic filling material-reinforced thermoplastic resin of the present invention and the molded article thereof can also be suitably used in sports applications by making use of their excellent properties such as high impact properties and causing no fracture, and can be suitably used as golf related goods such as golf club, shaft, grip and golf ball; racket related sports goods such as tennis racket, badminton racket, and their string; personal protective sports goods such as mask, helmet, chest protector, elbow pad, and knee pad for American football, baseball, and soft ball; wear related goods such as sportswear; shoe related goods such as soles of sports shoes; fishing related goods such as fishing pole and fishing line; summer sports related goods such as for surfing; winter sports related goods such as ski and snow board; and other indoor and outdoor sports related goods.

### EXAMPLES

The present invention will be described below with reference to Examples, but it should be understood that the present invention is not construed as being limited thereto. The following raw materials were used to prepare a resin composition in each Example.

### <Inorganic filling material>

(A-1): Glass fiber (E glass composition, diameter: 10 um, fiber length: 3 mm)
(A-2): Talc (average particle size: 10 um)
(A-3): Mica (average particle size: 50 um, average thickness: 1.0 um, aspect ratio: 50).

### <Polyrotaxane>

(B-1): Polyrotaxane ("SeRM" (registered trademark) super polymer SH1300P manufactured by Advanced Softmaterials Inc). A polyrotaxane in which the cyclic molecule is α-cyclodextrin modified with a graft chain composed of poly(ε-caprolactone) and having a hydroxyl group at the end, the linear molecule is polyethylene glycol, and the blocking group is an adamantane group. The number average molecular weight of polyethylene glycol as a linear molecule is 15,000, and the weight average molecular weight of the entire polyrotaxane is 180,000.

Here, the number average molecular weight of polyethylene glycol and the weight average molecular weight of polyrotaxane are values in terms of polymethyl methacrylate, measured by gel permeation chromatography using hexafluoroisopropanol as a solvent, and Shodex HFIP-806M (two columns) +HFIP-LG as a column.

### <Silane coupling agent>

(C-1): 2-(3,4-Epoxycyclohexyl)ethyltrimethoxysilane (silane coupling agent KBM-303, manufactured by Shin-Etsu Chemical Co., Ltd.), molecular weight: 246.4 g/mol.
(C-2): 3-Aminopropyltrimethoxysilane (silane coupling agent KBM-903, manufactured by Shin-Etsu Chemical Co., Ltd.), molecular weight: 221.3 g/mol.

### <Compound D>

(D-1): A copolymer obtained by copolymerizing 40 parts by weight of maleic anhydride, 50 parts by weight of methyl acrylate, and 10 parts by weight of methyl methacrylate, weight average molecular weight: 20,000 g/mol.

### <Thermoplastic resin>

(E-1): Polyamide 6 resin ("AMILAN" (registered trademark) manufactured by Toray Industries, Inc.), ηr: 2.70, melting point: 225°C.

Here, the relative viscosity ηr was measured at 25°C in a 0.01 g/ml solution of 98% concentrated sulfuric acid. The melting point was determined by the following procedure using a differential scanning calorimeter. In an inert gas atmosphere, the temperature of the polyamide was decreased from a molten state to 30°C at a temperature decrease rate of 20°C/min, and then increased to 265°C at a temperature rise rate of 20°C/min, and the temperature of an endothermic peak observed was defined as the melting point.

(E-2): Polybutylene terephthalate resin ("TORAYCON" (registered trademark) manufactured by Toray Industries, Inc.), η: 0.85 dl/g, melting point: 223°C.

Here, the intrinsic viscosity η was measured at 25°C using an o-chlorophenol solution. The melting point was determined by the following procedure using a differential scanning calorimeter. In an inert gas atmosphere, the temperature of the polybutylene terephthalate was decreased from a molten state to 30°C at a temperature decrease rate of 20°C/min, and then increased to 263°C at a temperature rise rate of 20°C/min, and the temperature of an endothermic peak observed was defined as the melting point.

(E-3): Polyamide 66 resin ("AMILAN" (registered trademark) manufactured by Toray Industries, Inc.), ηr: 2.78, melting point: 260°C.

### (Reference Examples 1 to 10)

### <Production of surface-treated inorganic filling material>

An aqueous dispersion in which a surface treatment agent (polyrotaxane (B), silane coupling agent (C), and compound (D)) was dispersed in 100 parts by weight of water at the proportions shown in Table 1 was prepared. The inorganic filling material (A) was added to the aqueous dispersion and stirred at room temperature for 5 minutes. Thereafter, the inorganic filling material was separated from the aqueous dispersion, and dried under reduced pressure at room temperature for 6 hours to obtain a surface-treated inorganic filling material. The results of measuring the amount of the surface treatment agent adhering to the obtained surface-treated inorganic filling material by the following method are shown in Table 1.

### <Composition analysis of surface-treated inorganic filling material>

About 2 g of the surface-treated inorganic filling material was weighed and the weight thereof was defined as W1. Thereafter, the surface-treated inorganic filling material was left to stand for 60 minutes in an electric furnace set at 450°C in a nitrogen stream at 50 mL/min to completely thermally decompose the surface treatment agent, thereby obtaining an inorganic filling material. Thereafter, the inorganic filling material was transferred to a vessel in a dry nitrogen stream at 20 L/min, cooled for 15 minutes, and then the inorganic filling material was weighed, and the weight thereof was defined as W2. The total adhesion amount of the surface treatment agent in the surface-treated inorganic filling material was calculated by the following formula. The adhesion amount was calculated from the ratio between the polyrotaxane (B) and the silane coupling agent (C) in the aqueous dispersion. Adhesion amount (parts by weight) = [W1 (g) - W2 (g)] / [W1 (g)] × 100

In this example, the measurement was performed twice, the average value thereof was taken as the adhesion amount, and the results are shown in Table 1.

### <Measurement of presence or absence of chemical bond between inorganic filling material surface and polyrotaxane>

About 2 g of the surface-treated inorganic filling material was washed with acetone and dried. The dried surface-treated inorganic filling material was mixed with KBr to prepare a tablet, and IR measurement was performed. IR measurement was performed in accordance with JIS K0117:2017 using IRPresize 21 manufactured by Shimadzu Corporation. When there was absorption at around 1750 cm⁻¹ derived from the C=O bond of polycaprolactone, which is a constituent component of the polyrotaxane (B), it was determined that the surface of the inorganic filling material (A) and the polyrotaxane (B) were chemically bonded.

### (Reference Examples 11 to 20)

### <Production of surface-treated inorganic filling material>

The polyrotaxane (B) and other components were dispersed in 100 parts by weight of water at the weight ratio shown in Table 2. The inorganic filling material (A) was added to the aqueous dispersion and stirred at 60°C for 30 minutes. Thereafter, the inorganic filling material was separated from the aqueous dispersion, and dried at 130°C for 6 hours to obtain a surface-treated inorganic filling material. The composition analysis of the surface-treated inorganic filling material and the measurement of the presence or absence of the chemical bond between the inorganic filling material surface and the polyrotaxane were performed in the same manner as described above, and the results are shown in Table 2.

### (Examples 1 to 29, Comparative Examples 1 to 8, Reference Examples 21 and 22)

### <Production of inorganic filling material-reinforced thermoplastic resin>

Using a twin-screw extruder (TEX30α manufactured by The Japan Steel Works, LTD.) set at a cylinder temperature of 250°C (Examples 19 to 20, and 280°C in Comparative Example 6) and a screw rotation speed of 200 rpm, the thermoplastic resin (E) was fed from a main feeder so as to have the compositions shown in Tables 3 to 6, and the surface-treated inorganic filling material or the inorganic filling material (A) obtained in respective Reference Examples was fed from a side feeder and melt-kneaded, and the extruded strand was pelletized to obtain pellets. The results of evaluating the obtained pellets by the method shown below are shown in Tables 3 to 6.

### <Bending test>

The pellets obtained in respective Examples and Comparative Examples were dried under reduced pressure at 80°C for 12 hours, and then injection-molded under the conditions of a cylinder temperature of 250°C (Examples 19 to 20, and 290°C in Comparative Example 6) and a mold temperature of 80°C using an injection molding machine (SG75H-MIV manufactured by Sumitomo Heavy Industries, Ltd.), thereby preparing a multi-purpose test piece A type obtained based on ISO 3167. The bending test piece obtained from this multi-purpose test piece was subjected to a bending test at a crosshead speed of 2 mm/min in accordance with ISO178 (2001) using a bending tester TENSILON RTA-1T (manufactured by Orientec Co., Ltd.) to determine the bending elastic modulus, the bending maximum point strength, and the bending elongation at break. The results are shown in Tables 3 to 6. The abbreviation N.B. in the bending elongation at break indicates a state in which the bending strength exceeds the maximum point at the time of the bending test, and the test piece is not broken at 90% of the maximum point.

**[Table 1-1]**

| | | | | Reference Example 1 | Reference Example 2 | Reference Example 3 | Reference Example 4 | Reference Example 5 |
|---|---|---|---|---|---|---|---|---|
| Composition of aqueous dispersion | Water | | Parts by weight | 100 | 100 | 100 | 100 | 100 |
| | B-1 | SH1300P | Parts by weight | 0.9 | 3 | 9 | 0.9 | 3 |
| | C-1 | KBM-303 | Parts by weight | 0.6 | 0.6 | 0.6 | | |
| | C-2 | KBM-903 | Parts by weight | | | | 0.6 | 0.6 |
| | D-1 | Maleic anhydride copolymer | Parts by weight | | | | 3 | 3 |
| Surface-treated inorganic filling material | A-1 | Glass fiber | Parts by weight | 100 | 100 | 100 | 100 | 100 |
| | A-2 | Talc | Parts by weight | | | | | |
| | A-3 | Mica | Parts by weight | | | | | |
| | B-1 | Reference Example 1 | Parts by weight | | | | | |
| | B-2 | SH1300P | Parts by weight | 0.3 | 1 | 3 | 0.3 | 1 |
| | C-1 | KBM-303 | Parts by weight | 0.2 | 0.2 | 0.2 | | |
| | C-2 | KBM-903 | Parts by weight | | | | 0.2 | 0.2 |
| | D-1 | Maleic anhydride copolymer | Parts by weight | | | | 1 | 1 |
| | Presence or absence of chemical bond | | | Absent | Absent | Absent | Absent | Absent |

**[Table 1-2]**

| | | | | Reference Example 6 | Reference Example 7 | Reference Example 8 | Reference Example 9 | Reference Example 10 |
|---|---|---|---|---|---|---|---|---|
| Composition of aqueous dispersion | Water | | Parts by weight | 100 | 100 | 100 | 100 | 100 |
| | B-1 | SH1300P | Parts by weight | 9 | 0.9 | 3 | 0.9 | 3 |
| | C-1 | KBM-303 | Parts by weight | | 0.6 | 0.6 | 0.6 | 0.6 |
| | C-2 | KBM-903 | Parts by weight | 0.6 | | | | |
| | D-1 | Maleic anhydride copolymer | Parts by weight | 3 | | | | |
| Surface-treated inorganic filling material | A-1 | Glass fiber | Parts by weight | 100 | | | | |
| | A-2 | Talc | Parts by weight | | 100 | 100 | | |
| | A-3 | Mica | Parts by weight | | | | 100 | 100 |
| | B-1 | Reference Example 1 | Parts by weight | | | | | |
| | B-2 | SH1300P | Parts by weight | 3 | 0.3 | 1 | 0.3 | 1 |
| | C-1 | KBM-303 | Parts by weight | | 0.2 | 0.2 | 0.2 | 0.2 |
| | C-2 | KBM-903 | Parts by weight | 0.2 | | | | |
| | D-1 | Maleic anhydride copolymer | Parts by weight | 1 | | | | |
| | Presence or absence of chemical bond | | | Absent | Absent | Absent | Absent | Absent |

**[Table 2-1]**

| | | | | Reference Example 11 | Reference Example 12 | Reference Example 13 | Reference Example 14 | Reference Example 15 |
|---|---|---|---|---|---|---|---|---|
| Composition of aqueous dispersion | Water | | Parts by weight | 100 | 100 | 100 | 100 | 100 |
| | B-1 | SH1300P | Parts by weight | 0.9 | 3 | 0.9 | 3 | 0.9 |
| | C-1 | KBM-303 | Parts by weight | 0.6 | 0.6 | 0.6 | 0.6 | 0.6 |
| | C-2 | KBM-903 | Parts by weight | | | | | |
| | D-1 | Maleic anhydride copolymer | Parts by weight | | | | | |
| Surface-treated inorganic filling material | A-1 | Glass fiber | Parts by weight | 100 | 100 | | | |
| | A-2 | Talc | Parts by weight | | | 100 | 100 | |
| | A-3 | Mica | Parts by weight | | | | | 100 |
| | B-1 | Reference Example 1 | Parts by weight | | | | | |
| | B-2 | SH1300P | Parts by weight | 0.3 | 1 | 0.3 | 1 | 0.3 |
| | C-1 | KBM-303 | Parts by weight | 0.2 | 0.2 | 0.2 | 0.2 | 0.2 |
| | C-2 | KBM-903 | Parts by weight | | | | | |
| | D-1 | Maleic anhydride copolymer | Parts by weight | | | | | |
| | Presence or absence of chemical bond | | | Present | Present | Present | Present | Present |

**[Table 2-2]**

| | | | | Reference Example 16 | Reference Example 17 | Reference Example 18 | Reference Example 19 | Reference Example 20 |
|---|---|---|---|---|---|---|---|---|
| Composition of aqueous dispersion | Water | | Parts by weight | 100 | 100 | 100 | 100 | 100 |
| | B-1 | SH1300P | Parts by weight | 3 | 0.9 | 3 | 0.9 | 3 |
| | C-1 | KBM-303 | Parts by weight | 0.6 | | | | |
| | C-2 | KBM-903 | Parts by weight | | | | 0.6 | 0.6 |
| | D-1 | Maleic anhydride copolymer | Parts by weight | | | | | |
| Surface-treated inorganic filling material | A-1 | Glass fiber | Parts by weight | | 100 | 100 | 100 | 100 |
| | A-2 | Talc | Parts by weight | | | | | |
| | A-3 | Mica | Parts by weight | 100 | | | | |
| | B-1 | Reference Example 1 | Parts by weight | | | | | |
| | B-2 | SH1300P | Parts by weight | 1 | 0.3 | 1.0 | 0.3 | 1.0 |
| | C-1 | KBM-303 | Parts by weight | 0.2 | | | | |
| | C-2 | KBM-903 | Parts by weight | | | | 0.2 | 0.2 |
| | D-1 | Maleic anhydride copolymer | Parts by weight | | | | | |
| | Presence or absence of chemical bond | | | Present | Absent | Absent | Absent | Absent |

**[Table 3-1]**

| | | | | Example 1 | Example 2 | Example 3 | Example 4 | Example 5 |
|---|---|---|---|---|---|---|---|---|
| Surface-treated inorganic filling material | | | | Reference Example 1 | Reference Example 2 | Reference Example 3 | Reference Example 4 | Reference Example 5 |
| | | | Parts by weight | 11.1 | 11.1 | 11.1 | 11.1 | 11.1 |
| Thermoplastic resin | E-1 | Polyamide 6 | Parts by weight | 100.0 | 100.0 | 100.0 | 100.0 | 100.0 |
| | E-2 | PBT | Parts by weight | | | | | |
| | E-3 | Polyamide 66 | Parts by weight | | | | | |
| Bending test (23°C) | Elastic modulus | | SPa | 4.4 | 4.4 | 4.3 | 4.2 | 4.4 |
| | Maximum point strength | | MPa | 161 | 163 | 138 | 168 | 159 |
| | Elongation at break | | % | N.B | N.B | N.B | N.B. | N.B |

**[Table 3-2]**

| | | | | Example 6 | Example 7 | Example 8 | Example 9 | Example 10 |
|---|---|---|---|---|---|---|---|---|
| Surface-treated inorganic filling material | | | | Reference Example 6 | Reference Example 7 | Reference Example 8 | Reference Example 9 | Reference Example 10 |
| | | | Parts by weight | 11.1 | 11.1 | 11.1 | 11.1 | 11.1 |
| Thermoplastic resin | E-1 | Polyamide 6 | Parts by weight | 100.0 | 100.0 | 100.0 | 100.0 | 100.0 |
| | E-2 | PBT | Parts by weight | | | | | |
| | E-3 | Polyamide 66 | Parts by weight | | | | | |
| Bending test (23°C) | Elastic modulus | | GPa | 4.3 | 3.8 | 3.5 | 3.8 | 3.4 |
| | Maximum point strength | | MPa | 142 | 123 | 111 | 121 | 123 |
| | Elongation at break | | % | N.B | N.B | N.B | N.B | N.B |

**[Table 4-1]**

| | | | | Example 11 | Example 12 | Example 13 | Example 14 | Example 15 |
|---|---|---|---|---|---|---|---|---|
| Surface-treated inorganic filling material | | | | Reference Example 11 | Reference Example 12 | Reference Example 13 | Reference Example 14 | Reference Example 15 |
| | | | Parts by weight | 11.1 | 11.1 | 11.1 | 11.1 | 11.1 |
| Thermoplastic resin | E-1 | Polyamide 6 | Parts by weight | 100.0 | 100.0 | 100.0 | 100.0 | 100.0 |
| | E-2 | PBT | Parts by weight | | | | | |
| | E-3 | Polyamide 66 | Parts by weight | | | | | |
| Bending test (23°C) | Elastic modulus | | GPa | 4.4 | 4.4 | 3.7 | 3.8 | 3.8 |
| | Maximum point strength | | MPa | 167 | 163 | 123 | 128 | 122 |
| | Elongation at break | | % | N.B | N.B | N.B | N.B | N.B. |

**[Table 4-2]**

| | | | | Example 16 | Example 17 | Example 18 | Example 19 | Example 20 |
|---|---|---|---|---|---|---|---|---|
| Surface-treated inorganic filling material | | | | Reference Example 16 | Reference Example 2 | Reference Example 5 | Reference Example 2 | Reference Example 5 |
| | | | Parts by weight | 11.1 | 11.1 | 11.1 | 11.1 | 11.1 |
| Thermoplastic resin | E-1 | Polyamide 6 | Parts by weight | 100.0 | | | | |
| | E-2 | PBT | Parts by weight | | 100.0 | 100.0 | | |
| | E-3 | Polyamide 66 | Parts by weight | | | | 100.0 | 100.0 |
| Bending test (23°C) | Elastic modulus | | SPa | 3.7 | 4.2 | 4.1 | 4.6 | 4.5 |
| | Maximum point strength | | MPa | 120 | 168 | 154 | 179 | 173 |
| | Elongation at break | | % | N.B | N.B | N.B | N.B | N.B |

**[Table 5-1]**

| | | | | Example 21 | Example 22 | Example 23 | Example 24 | Example 25 |
|---|---|---|---|---|---|---|---|---|
| Surface-treated inorganic filling material | | | | Reference Example 2 | Reference Example 5 | Reference Example 8 | Reference Example 10 | Reference Example 12 |
| | | | Parts by weight | 42.9 | 42.9 | 42.9 | 42.9 | 42.9 |
| Thermoplastic resin | E-1 | Polyamide 6 | Parts by weight | 100.0 | 100.0 | 100.0 | 100.0 | 100.0 |
| | E-2 | PBT | Parts by weight | | | | | |
| | E-3 | Polyamide 66 | Parts by weight | | | | | |
| Bending test (23°C) | Elastic modulus | | SPa | 9.7 | 9.5 | 9.6 | 9.5 | 9.6 |
| | Maximum point strength | | MPa | 270 | 268 | 265 | 258 | 272 |
| | Elongation at break | | % | N.B | N.B | N.B | N.B | N.B |

**[Table 5-2]**

| | | | | Example 26 | Example 27 | Example 28 | Example 29 |
|---|---|---|---|---|---|---|---|
| Surface-treated inorganic filling material | | | | Reference Example 14 | Reference Example 16 | Reference Example 18 | Reference Example 6 |
| | | | Parts by weight | 42.9 | 42.9 | 42.9 | 42.9 |
| Thermoplastic resin | E-1 | Polyamide 6 | Parts by weight | 100.0 | 100.0 | 100.0 | 100.0 |
| | E-2 | PBT | Parts by weight | | | | |
| | E-3 | Polyamide 66 | Parts by weight | | | | |
| Bending test (23°C) | Elastic modulus | | SPa | 9.4 | 9.7 | 9.4 | 9.6 |
| | Maximum point strength | | MPa | 256 | 271 | 272 | 255 |
| | Elongation at break | | % | N.B | N.B | N.B | N.B |

**[Table 6-1]**

| | | | | Comparative Example 1 | Comparative Example 2 | Comparative Example 3 | Comparative Example 4 | Comparative Example 5 |
|---|---|---|---|---|---|---|---|---|
| Surface-treated inorganic filling material | | | | A-1 | A-1 | A-2 | A-3 | A-1 |
| | | | Parts by weight | 11.1 | 42.9 | 11.1 | 11.1 | 11.1 |
| Thermoplastic resin | E-1 | Polyamide 6 | Parts by weight | 100.0 | 100.0 | 100.0 | 100.0 | |
| | E-2 | PBT | Parts by weight | | | | | 100.00 |
| | E-3 | Polyamide 66 | Parts by weight | | | | | |
| Bending test (23°C) | Elastic modulus | | GPa | 4.4 | 9.3 | 3.8 | 3.9 | 3.9 |
| | Maximum point strength | | MPa | 166 | 292 | 128 | 126 | 124 |
| | Elongation at break | | % | 4.3 | 4.2 | 4.8 | 4.9 | 4.5 |

**[Table 6-2]**

| | | | | Comparative Example 6 | Comparative Example 7 | Comparative Example 8 | Reference Example 21 | Reference Example 22 |
|---|---|---|---|---|---|---|---|---|
| Surface-treated inorganic filling material | | | | A-1 | Reference Example 17 | Reference Example 18 | Reference Example 19 | Reference Example 20 |
| | | | Parts by weight | 11.1 | 11.1 | 11.1 | 11.1 | 11.1 |
| Thermoplastic resin | E-1 | Polyamide 6 | Parts by weight | | 100.0 | 100.0 | 100.0 | 100.0 |
| | E-2 | PBT | Parts by weight | | | | | |
| | E-3 | Polyamide 66 | Parts by weight | 100.00 | | | | |
| Bending test (23°C) | Elastic modulus | | SPa | 4.5 | 3.8 | 3.7 | 4.0 | 3.8 |
| | Maximum point strength | | MPa | 130 | 112 | 105 | 118 | 111 |
| | Elongation at break | | % | 4.3 | 4.6 | 4.1 | 6.4 | 5.7 |

The comparison of Examples 1 to 6 and 11 to 12 with Comparative Examples 1 and 7 to 8, the comparison of Examples 17 and 18 with Comparative Example 5, the comparison of Examples 19 and 20 with Comparative Example 6, and the comparison of Examples 21 to 29 with Comparative Example 2 show that the presence of the polyrotaxane (B) and the silane coupling agent (C) improves elongation at break while maintaining the rigidity and strength of the glass fiber-reinforced thermoplastic resin at a high level. Further, the comparison of Examples 7 and 8 with Comparative Example 3, and the comparison of Examples 9 and 10 with Comparative Example 4 show that even in an inorganic filling material such as talc or mica, the presence of a component that bonds polyrotaxane and glass fiber provides a toughness improving effect.

The comparison of Examples 4 and 5 with Reference Examples 21 and 22 shows that when the silane coupling agent is a silane coupling agent having an amino group, inclusion of the compound having two or more functional groups capable of reacting with the amino group and the reactive functional group of the polyrotaxane (B) in the molecule yields a toughness improving effect.

## Claims

1. A surface-treated inorganic filling material, wherein an inorganic filling material (A) is treated with at least a polyrotaxane (B) whose cyclic molecule is modified with a graft chain having a reactive functional group, and a silane coupling agent (C).

2. The surface-treated inorganic filling material according to claim 1, wherein the silane coupling agent (C) has any one group of an epoxy group, a glycidyl group, an acid anhydride, an isocyanate group, an isothiocyanate group, and a functional group containing a polymerizable double bond.

3. The surface-treated inorganic filling material according to claim 1, wherein the inorganic filling material (A) is treated with at least the polyrotaxane (B) whose cyclic molecule is modified with a graft chain having a reactive functional group, the silane coupling agent (C), and a compound (D) having two or more functional groups capable of reacting with an amino group and a reactive functional group of the polyrotaxane (B) in a molecule, and the silane coupling agent (C) has at least one amino group.

4. The surface-treated inorganic filling material according to any one of claims 1 to 3, wherein the inorganic filling material (A) is an inorganic filling material selected from a glass fiber, talc, silica, clay, wollastonite, mica, and a glass flake.

5. The surface-treated inorganic filling material according to any one of claims 1 to 3, wherein the inorganic filling material (A) is an inorganic filling material selected from talc, silica, clay, wollastonite, mica, and a glass flake.

6. An inorganic filling material-reinforced thermoplastic resin comprising at least the surface-treated inorganic filling material according to any one of claims 1 to 5 and a thermoplastic resin (E), wherein the inorganic filling material-reinforced thermoplastic resin contains 1 part by weight or more and 200 parts by weight or less of the surface-treated inorganic filling material relative to 100 parts by weight of the thermoplastic resin (E).
